# EUROPÄISCHE PATENTSCHRIFT

(11) **EP 3 369 301 B1**
(45) Veröffentlichungstag und Bekanntmachung des Hinweises auf die Patenterteilung: **24.02.2021**
(21) Anmeldenummer: 17208520.1
(22) Anmeldetag: 19.12.2017
(51) Int. Cl.: A01F 12/44

(54) **LANDWIRTSCHAFTLICHE ERNTEMASCHINE**
AGRICULTURAL HARVESTER
MOISSONNEUSE

(30) Priorität: 15.02.2017 DE 102017102996
(43) Veröffentlichungstag der Anmeldung: 05.09.2018
(73) Patentinhaber: CLAAS Selbstfahrende Erntemaschinen GmbH, 33428 Harsewinkel (DE)
(72) Erfinder: Claas, Helmut, Dr., 33428 Harsewinkel (DE)
(74) Vertreter: CLAAS Gruppe

(56) Entgegenhaltungen:
- DE-A1- 3 324 492
- FR-A- 1 230 810
- US-A- 3 443 565

## Beschreibung

Die vorliegende Erfindung betrifft eine landwirtschaftliche Erntemaschine gemäß dem Oberbegriff des Anspruches 1.

Landwirtschaftliche Erntemaschinen, insbesondere Mähdrescher, weisen eine Separier- oder Reinigungseinrichtung auf, mittels der ein im Wesentlichen aus Körnern bestehender Erntegutstrom nach Durchlaufen eines oder mehrerer Trenn- und Abscheideprozesse gereinigt wird. Übliche Reinigungseinrichtungen umfassen einen Siebkasten, in welchem ein oder mehrere sich in horizontaler Richtung erstreckende Siebe, die oszillierend angetrieben sind, angeordnet sind.

Ergänzend oder alternativ zu diesem Aufbau einer Reinigungseinrichtung sind rotierend angetriebene Separier- oder Reinigungseinrichtungen aus dem Stand der Technik bekannt, wie nachstehend kurz erläutert ist.

So beschreibt die DE 1 164 735 B eine als Mähdrescher ausgeführte landwirtschaftliche Erntemaschine mit einem Rüttelsiebe aufweisenden Siebkasten. Die nicht von den Rüttelsieben abgeschiedenen Erntegutbestandteile, die als Überkehr bezeichnet werden und sich im Wesentlichen aus unausgedroschenem Erntegut zusammensetzen, werden einem zur Horizontalen geneigt angeordneten Schneckenförderer zugeführt. Der Schneckenförderer umfasst einen äußeren zylindrischen Mantel, der, in axialer Richtung gesehen, auf seinem unteren Teil innenseitig angeordnete, auf das zu fördernde Erntegut einwirkende Mittel aufweist, und auf seinem oberen Teil als Sieb ausgeführt ist, um Körner aus dem Überkehrstrom abscheiden zu können. Dieser als Sieb ausgeführte Bereich des Mantels ist von einem Gehäuse umgeben, welches dem Auffangen der durch das Sieb abgeschiedenen Körner dient. Endseitig ist an dem Schneckenförderer ein Gebläse angeordnet, welches einen entgegen der aufsteigenden Förderrichtung gerichteten Luftstrom erzeugt. Der Luftstrom dient dazu, Kurzstroh und Spreu entgegen der Förderrichtung des Schneckenförderers abzutransportieren.

Aus der US 1,949,725 ist eine Reinigungseinrichtung für eine Dreschvorrichtung bekannt, welche ein zur Horizontalen geneigt angeordnetes zylindrisches Gehäuse aufweist, in welchem eine von einer Mantelhülle umschlossene Förderschnecke angeordnet ist. Die Mantelhülle ist über ihren Umfang perforiert ausgeführt. Am unteren Ende des Gehäuses ist ein Druckgebläse angeordnet, welches einen in Förderrichtung gerichteten Luftstrom in den Bereich zwischen dem Gehäuse und der Mantelhülle einleitet. Durch die Rotation der Förderschnecke werden Körner nach außen durch die perforierte Mantelfläche hindurch abgeschieden und gelangen aufgrund ihrer Schwerkraft entlang der Innenwand des zylindrischen Gehäuses zu einer im unteren Bereich der Reinigungseinrichtung angeordneten Querförderschnecke, während die leichten Bestandteile, wie Stroh und Spreu, nach oben hin von dem Luftstrom aus der Reinigungseinrichtung ausgetragen werden. Diese Anordnung einer Reinigungseinrichtung zeichnet sich durch einen großen Bauraumbedarf aus.

Die DE 33 24 492 A1 zeigt eine landwirtschaftliche Erntemaschine gemäß dem Oberbegriff des Anspruches 1. Die Erntemaschine weist eine als Reinigungseinrichtung ausgeführte Separiereinrichtung auf, die ein zylindrisches Gehäuse umfasst, innerhalb dessen eine siebartig ausgebildete, zylindrische Mantelhülle angeordnet ist. Im Inneren der Mantelhülle befindet sich eine angetriebene Förderschnecke, welche sich in Längsrichtung der Mantelhülle erstreckt. Im unteren Bereich der zylindrischen Mantelhülle gelangt zu trennendes Erntegut zu der Förderschnecke, welche das Erntegut in im Wesentlichen vertikaler Richtung fördert. Das Gehäuse weist über seinen Umfang verteilt eine Vielzahl von Lufteintrittsöffnungen auf, durch welche Luft mittels eines im oberen Bereich der Separiereinrichtung angeordneten Sauggebläses aus der Umgebung der Reinigungseinrichtung angesaugt wird. Die angesaugte Luft durchströmt einen zwischen dem Gehäuse und der Mantelhülle gebildeten Ringraum. Die Öffnungen der Mantelhülle sind so bemessen, dass Korn und kleine Nichtkornbestandteile in den Ringraum eintreten können. Hier werden das Korn und die leichteren Nichtkornbestandteile aufgrund der Schwerkraft und des den Ringraum in vertikaler Richtung durchströmenden Luftstromes voneinander getrennt. Alle von der Förderschnecke geförderten Bestandteile des Erntegutes, welche die Mantelhülle nicht in Richtung des Ringraumes passieren, werden durch die nach unten offene Mantelhülle nach außen ausgetragen und gelangen auf das Feld zurück. Auch diese Reinigungseinrichtung zeichnet sich durch einen erheblichen Bauraumbedarf aus.

Aufgabe der vorliegenden Erfindung ist es, eine landwirtschaftliche Erntemaschine der eingangs genannten Art weiterzubilden, so dass sich deren Separiereinrichtung durch eine bauraumsparende Anordnung auszeichnet.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird eine landwirtschaftliche Erntemaschine, insbesondere Mähdrescher, mit einer Einrichtung zum Reinigen von Erntegut, umfassend ein zylindrisches Gehäuse, eine im Inneren des Gehäuses angeordnete, zumindest abschnittsweise siebartig ausgebildete, zylindrische Mantelhülle, eine von der Mantelhülle umschlossene Förderschnecke sowie Mittel zur Beaufschlagung der Separiereinrichtung mit einem Luftstrom vorgeschlagen, wobei die Mantelhülle von einer zylindrischen Ummantelung umgeben ist, welche in Längsrichtung von dem Luftstrom durchströmt ist. Dieser als Mehrmantelstruktur ausgebildete Aufbau der nach dem Prinzip der rotierenden Reinigung arbeitenden Separiereinrichtung trägt zu einer Reduzierung des erforderlichen Bauraumes im Inneren der landwirtschaftlichen Erntemaschine bei. Aufgrund der Mehrmantelstruktur bildet sich zwischen der Mantelhülle und der Förderschnecke eine erste Ringkammer und zwischen der Mantelhülle und der Ummantelung eine zweite Ringkammer im Inneren des Gehäuses aus. Hierdurch lässt sich eine mehrstufige Reinigung des Erntegutstromes erreichen. Dabei wird zu separierendes Erntegut, welches in der ersten Ringkammer nicht aufgrund von Schwerkraft und des Luftstromes abgeschieden wird, der zweiten Ringkammer zugeführt, in welcher die gleichen Mechanismen wirksam sind. Hierdurch lassen sich Erntegutverluste deutlich reduzieren, indem das aufgrund der Schwerkraft in der zweiten Ringkammer abgeschiedene Erntegut erneut der ersten Ringkammer zugeführt wird.

Vorteilhafterweise kann die Ummantelung auf ihrer der Mantelhülle zugewandten Innenseite mit zumindest einem unter einem Winkel zur Längsachse der Förderschnecke geneigt angeordneten Luftleitelement ausgeführt sein. Die Anordnung zumindest eines Luftleitelementes trägt dazu bei, dass die Größenordnung des durch die erste Ringkammer zur Separierung des Erntegutes hindurchzuführenden Luftvolumenstromes in einem vertretbaren Rahmen bleibt. Mittels des zumindest einen Luftleitelementes kann die Separierung des durch die Mantelhülle hindurchtretenden Erntegutes verstärkt werden. Dabei können die schwereren Erntegutbestandteile, wie Korn, mittels des zumindest einen Luftleitelementes nach außen in Richtung der Ummantelung abgelenkt werden, während die leichten, faserartigen, kurzen Erntegutbestandteile, wie Spreu, Kurzstroh, Teile von Blättern und dergleichen mehr, nach innen in Richtung der Mantelhülle abgelenkt werden, wo sie durch den Luftstrom abgefördert werden.

Insbesondere kann das zumindest eine Luftleitelement schrauben- oder spiralförmig ausgebildet sein. Hierbei kann das zumindest eine Luftleitelement eine schrauben- oder spiralförmige in Förderrichtung des Erntegutes aufsteigende Anordnung aufweisen, welche mit der Drehrichtung der Förderschnecke korrespondiert. Die Steigung des zumindest einen Luftleitelementes kann zwischen 35° und 55° besonders bevorzugt zwischen 40° und 50° betragen. Auf diese Weise kann in der ersten Ringkammer ein vergleichbarer Separiereffekt erreicht werden, wie dies bei der Förderschnecke im Inneren der Mantelhülle der Fall ist. Das Luftleitelement kann hierzu als ein durchgehendes schrauben- oder spiralförmiges Bauteil ausgeführt sein oder aus mehreren, in Förderrichtung gesehen schrauben- oder spiralförmig hintereinander angeordneten Bauteilen bestehen.

Hierzu sollte der Luftstrom in Förderrichtung der Förderschnecke gerichtet sein. Der die Mantelhülle sowie den ersten Ringraum zwischen der Mantelhülle und der Ummantelung durchströmende Luftstrom fördert dabei die leichten Erntegutbestandteile in Förderrichtung der Förderschnecke ab, während die schwereren Erntegutbestandteile aufgrund der Schwerkraft nach außen und unten gelangen.

Weiterhin kann die Förderschnecke ein oder mehrere Schneckenbleche aufweisen, die zumindest im oberen Abschnitt der Förderschnecke mit Öffnungen versehen sind. Dies dient dazu, dass abzuscheidendes Erntegut, welches während der Förderung durch die Förderschnecke nicht durch die zumindest abschnittsweise siebartig ausgebildete Mantelhülle abgeschieden wurde, daran zu hindern, gemeinsam mit dem abzuscheidenden Erntegut nach oben aus der Mantelhülle auszutreten. Durch die Öffnungen in dem oder den Schneckenblechen kann das abzuscheidende Erntegut hindurchtreten, so dass es nach unten fallen kann und nicht von der Förderschnecke weitergefördert wird.

Vorzugsweise können im Auslaufbereich der Förderschnecke Abstreifelemente an der Innenseite der Ummantelung angeordnet sein. Diese können in Richtung der Förderschneckenwelle ragen und dazu beitragen, die schwereren Bestandteile des Erntegutes, die während der Förderung mittels der Förderschnecke noch nicht durch die Mantelhülle abgeschieden worden sind, daran zu hindern, mit den leichteren Bestandteilen aus der Separiereinrichtung als Erntegutverlust abgeschieden zu werden.

Gemäß einer Weiterbildung kann vorgesehen sein, dass das wenigstens eine Schneckenblech der Förderschnecke entlang seiner axialen Erstreckung durch Öffnungen unterbrochen ist. Hierdurch kann die Förderschnecke in ein schrägstehendes kamm- oder propellerartiges Gebilde aufgelöst werden. Dabei können die Abstreifelemente im Bereich der Öffnungen in dem wenigstens einen Schneckenblech oberhalb dieser als rechenartige Gebilde ausgeführt sein, welche die schwereren Erntegutbestandteile hindurchtreten lassen, jedoch die leichteren Erntegutbestandteile weitgehend in Förderrichtung der Förderschnecke abfördern, wobei letzteres durch den Luftstrom unterstützt wird.

Bevorzugt kann die Ummantelung im Auslaufbereich der Förderschnecke sich in Umfangsrichtung erstreckende Austrittsöffnungen aufweisen. Durch diese Austrittsöffnungen können die schweren Bestandteile des Erntegutes in den Raum zwischen der Mantelhülle und die diese umgebende Ummantelung, die erste Ringkammer, gelangen, in welcher diese schwerkraftbedingt entgegen des hindurchgeführten Luftstromes nach unten sinken.

Insbesondere kann der aus der obenseitig offenen Ummantelung austretende Luftstrom durch das die Ummantelung umhüllende Gehäuse nach unten führbar sein. In diesem Bereich der Separiereinrichtung erfolgt eine Trennung von Luftstrom und dem darin enthaltenen abzuscheidenden Erntegut. Die Abscheidung des aus der Separiereinrichtung abzuführenden Erntegutes aus dem Luftstrom kann vorzugsweise im Zentrifugalverfahren erfolgen.

Vorzugsweise können die Förderschnecke und die Mantelhülle unabhängig voneinander antreibbar sein. Hierdurch lässt sich die Abscheideleistung durch die Förderschnecke verbessern. Dabei rotiert die Mantelhülle in gleicher Richtung wie die Förderschnecke. Die Rotationsgeschwindigkeit der Mantelhülle kann in Abhängigkeit von den Betriebs- und/oder Erntegutparametern variiert werden, um eine optimale Separation des Erntegutes während der Förderung durch die Förderschnecke zu erreichen sowie um Erntegutverluste möglichst gering zu halten.

Weiterhin kann die Separiereinrichtung um einen Winkel zur Vertikalen neigbar sein. Auf diese Weise kann eine Hanglage der Erntemaschine ausgeglichen werden, so dass partielle Anhäufungen von Erntegut im Inneren der Separiereinrichtung in Folge der Hangneigung vermeiden werden können. Es kann somit eine gleichmäßige Verteilung des Erntegutes in der Separiereinrichtung aufrechterhalten werden, um einen verlustarmen Separierungsprozess zu gewährleisten.

Besonders vorteilhaft ist es, wenn das Mittel zur Beaufschlagung der Separiereinrichtung mit einem Luftstrom als ein Sauggebläse ausgebildet ist, welches den in Förderrichtung der Förderschnecke gerichteten Luftstrom erzeugt, welcher die Förderschnecke und das Innere der Ummantelung durchströmt und bei dessen Austritt aus der Förderschnecke und der Ummantelung durch das Gehäuse in einem zumindest abschnittsweise ringförmigen Raum zwischen dem Gehäuse und der Ummantelung entgegen der Förderrichtung der Förderschnecke umlenkbar ist. Der vorzugsweise im Zentrifugalverfahren abgeschiedene Luftstrom wird durch den ringförmigen Raum zwischen dem Gehäuse und der Ummantelung in den unteren Bereich der Separiereinrichtung gefördert, wo dieser von einem oberhalb der Ummantelung beziehungsweise der Mantelhülle angeordneten Sauggebläse im Umlaufverfahren gefördert wird. Dies trägt zu einer erheblichen Reduzierung der Staubentwicklung bei.

Hierzu kann die Förderschnecke im Einlaufbereich angenommenes zu separierendes Erntegut in vertikaler Richtung fördern, wobei schwerere Erntegutbestandteile durch die zumindest abschnittsweise siebartig ausgebildete Mantelhülle separierbar sind, während die leichteren Erntegutbestandteile mittels der Luftströmung im Auslaufbereich der Förderschnecke aus dieser austragbar und durch einen nachgeordneten Zentrifugalabscheider aus dem Luftstrom abscheidbar sind.

Weiterhin kann die Separiereinrichtung ein erstes Querförderorgan und ein zweites Querförderorgan aufweisen, die im Wesentlichen senkrecht zur Förderschnecke angeordnet. Mittels des ersten Querförderorgans kann zu reinigendes Erntegut der Separiereinrichtung zugeführt werden. Durch das zweite Querförderorgan kann gereinigtes Erntegut aus der Separiereinrichtung abgeführt werden. Dabei ragen das erste Querförderorgan und das zweite Querförderorgan abschnittsweise in das Gehäuse der Separiereinrichtung hinein.

Gemäß einer bevorzugten Weiterbildung kann die Separiereinrichtung ein sich im unteren Bereich des Gehäuses an dieses anschließendes Gehäusesegment aufweisen, welches im Wesentlichen trichterförmig ausgebildet ist. Das trichterförmige Gehäusesegment kann dem Zusammenführen von Erntegut, im Wesentlichen unausgedroschene Ährenteile, Korn Spreu und dergleichen, der so genannte Überkehr, dienen, welches durch den zumindest abschnittsweise ringförmigen Raum zwischen dem Gehäuse und der Ummantelung, die zweite Ringkammer, in den unteren Bereich der Separiereinrichtung gelangt.

Insbesondere kann das Gehäusesegment in ein drittes Förderorgan münden. Das dritte Förderorgan kann insbesondere als Querförderschnecke ausgeführt sein. Das dritte Förderorgan kann dazu verwendet werden, die Überkehr der Dreschvorrichtung des Mähdreschers zum wiederholten Ausdrusch zuzuführen.

Die vorliegende Erfindung wird nachstehend anhand eines in den Zeichnungen dargestellten Ausführungsbeispieles näher erläutert.

Es zeigen:
- Fig. 1: eine schematische Darstellung einer landwirtschaftlichen Erntemaschine;
- Fig. 2: eine schematische Darstellung einer Separier- oder Reinigungseinrichtung;
- Fig. 3: eine schematische Darstellung einer Separier- oder Reinigungseinrichtung gemäß einer zweiten Ausführungsform.

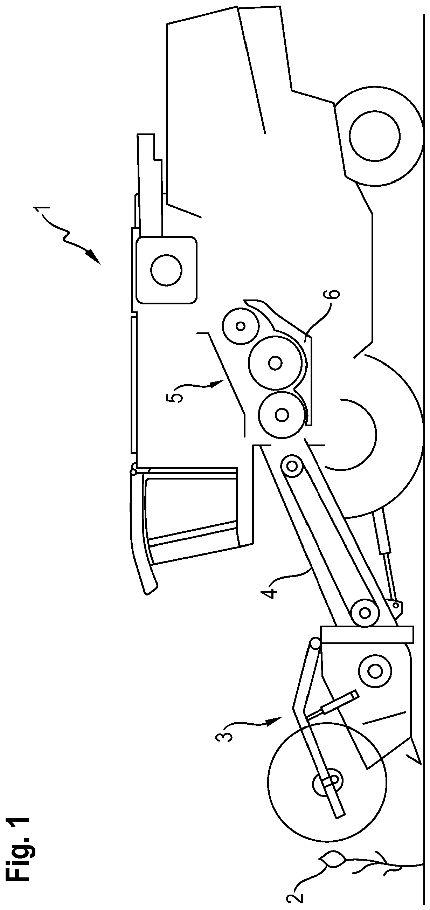

Die Darstellung in Fig. 1 zeigt eine schematische Längsschnittdarstellung einer als Mähdrescher 1 ausgeführten landwirtschaftlichen Erntemaschine. Der Mähdrescher 1 trägt in seinem Frontbereich ein Vorsatzgerät 3, wie ein höhenverstellbares Schneidwerk, welches gewachsenes Erntegut 2 auf großer Breite aberntet, in seitlicher Richtung zusammenführt und an ein Schrägförderorgan 4 übergibt. Als Vorsatzgerät 3 kommt jedes fruchartspezifische Vorsatzgerät in Betracht, welches an dem Mähdrescher 1 zum Ernte von Erntegut anbringbar ist. Durch das Schrägförderorgan 4 gelangt das Erntegut 3 zu einer Dreschvorrichtung 5, welche in der Regel als ein Mehrtrommeldreschwerk ausgeführt ist.

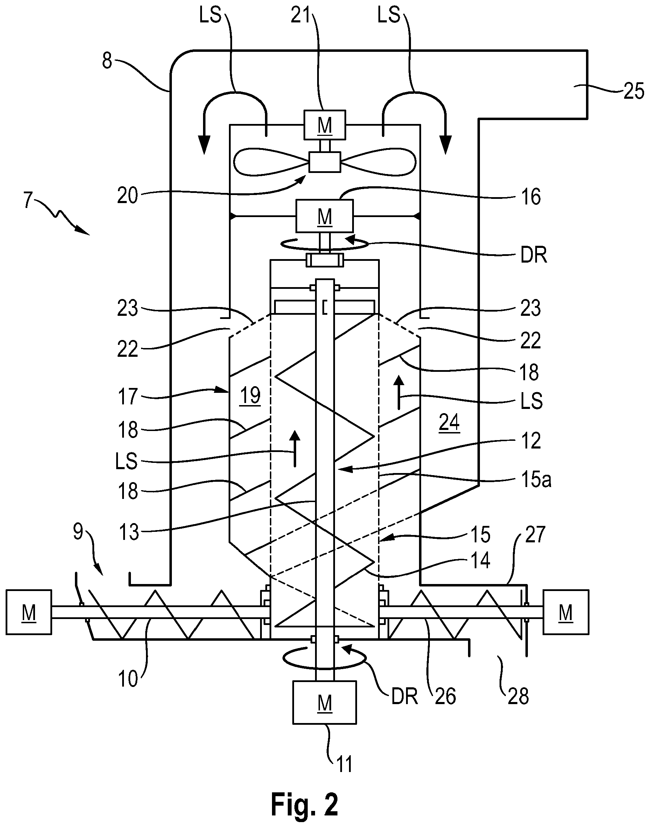

Durch Öffnungen eines Dreschkorbs 6 hindurch wird aus dem Erntegut 2 ein im Wesentlichen aus einem Gemisch aus Körnern, Kurzstroh und Spreu bestehender Erntegutstrom abgeschieden, der auf einen unterhalb der Dreschvorrichtung 5 angeordneten Vorbereitungsboden fällt. Durch Rüttelbewegungen des oszillierend angetriebenen Vorbereitungsbodens wird das Erntegut darauf nach hinten in Richtung einer in Fig. 2 näher dargestellten Reinigungseinrichtung 7 gefördert.

Der nicht durch den Dreschkorb 6 hindurch getretene Teil des Erntegutstroms wird einer sich in Längsrichtung des Mähdreschers 1 erstreckenden Abscheidevorrichtung zugeführt. Von der Abscheidevorrichtung wird ein im Wesentlichen aus einem Gemisch aus Körnern und Ährenbruchstücken bestehender Erntegutstrom abgeschieden, der auf einen unterhalb der Abscheidevorrichtung angeordneten Rücklaufboden gelangt.

Von dem rüttelnd bewegten Rücklaufboden wird das von der Abscheidevorrichtung abgegebene Erntegut vorwärts in Richtung der Dreschorgane 9-gefördert und an den Vorbereitungsboden übergeben, wo sich der Erntegutstrom des Rücklaufbodens mit dem durch den Dreschkorb 6 hindurch getretenen Erntegutstrom vereinigt, der von dem Vorbereitungsboden an die Reinigungseinrichtung 7 abgegeben wird.

In Fig. 2 ist eine schematische Darstellung einer Separier- oder Reinigungseinrichtung 7 gezeigt, wie sie in der als Mähdrescher 1 ausgeführten landwirtschaftlichen Erntemaschine zum Einsatz kommen kann. Die Separier- oder Reinigungseinrichtung 7 umfasst ein im Wesentlichen zylindrisches Gehäuse 8.

Vorzugsweise besitzt das Gehäuse 8 eine im Wesentlichen hohlzylindrische Form. Das Gehäuse 8 weist in seinem unteren Bereich eine Guteintrittsöffnung 9 auf, durch welche von dem Vorbereitungsboden kommendes, zu separierendes Erntegut, welches sich aus Korn, Spreu, Kurzstroh sowie Teilen von Blättern zusammensetzen kann, in das Gehäuse 8 gelangt. Im unteren Bereich des Gehäuses 8 wird das Erntegut in radialer Richtung der Separier- oder Reinigungseinrichtung 7 gefördert. Dies erfolgt mittels eines ersten Querförderorgans 10. Im dargestellten Ausführungsbeispiel kommt eine Querförderschnecke als erstes Querförderorgan 10 zum Einsatz. Das erste Querförderorgan 10 fördert das zu separierende Erntegut in das Innere des Gehäuses 8. Im Inneren des Gehäuses 8 wird es von einer sich koaxial zur Längsachse des Gehäuses 8 erstreckenden Förderschnecke 12 angenommen und gefördert. Die Förderschnecke 12 ist mittels eines im unteren Bereich des Gehäuses 8 angeordneten Antriebes 11 antreibbar. Ein Pfeil DR gibt dabei die Drehrichtung der Förderschnecke 12 wieder.

Die eine Schneckenwelle 13 und zumindest ein darauf angeordnetes Schneckenblech 14 umfassende Förderschnecke 12 erstreckt sich abschnittsweise in Längsrichtung des Gehäuses 8. Die Förderschnecke 12 ist von einer im Wesentlichen zylindrischen Mantelhülle 15 umgeben, die koaxial zu der Längsachse des Gehäuses 8 angeordnet ist. Die Mantelhülle 15 ist zumindest abschnittsweise siebartig ausgebildet. Dieser siebartige Abschnitt 15a umgibt die Förderschnecke 12 in Umfangs- und Längsrichtung. Auslaufseitig ist die Schneckenwelle 13 der Förderschnecke 12 in der Mantelhülle 15 gelagert. Die Mantelhülle 15 ist mittels eines oberhalb der Förderschnecke 12 angeordneten separaten Antriebs 16 rotierend antreibbar. Ein Pfeil DR gibt dabei die Drehrichtung der Mantelhülle 15 wieder, welche mit der Drehrichtung der Förderschnecke 12 korrespondiert.

Die Mantelhülle 15 ist ihrerseits von einer Ummantelung 17 umgeben, welche sich in Längsrichtung des Gehäuses 8 erstreckt. Die ebenfalls im Wesentlichen zylindrische Ummantelung 17 ist radial zu der Mantelhülle 15 beabstandet, so dass sich zwischen der Mantelhülle 15 und der Ummantelung 17 eine erste Ringkammer 19 ausbildet. Die Ummantelung 17 erstreckt sich ausgehend vom unteren Bereich des Gehäuses 8 in dessen Längsrichtung und endet oberhalb des Antriebes 16 der Mantelhülle 15. Die Ummantelung 17 umschließt dabei einen siebartigen Abschnitt 15a der Mantelhülle 15 vollständig. Auf ihrer der Mantelhülle 15 zugewandten Seite ist die Ummantelung 17 mit zumindest einem, unter einem Winkel zur Längsachse der Förderschnecke 12 geneigt angeordneten Luftleitelement 18 ausgeführt. Das zumindest eine Luftleitelement 18 ist schrauben- oder spiralförmig ausgebildet und ist in Richtung des Kopfbereiches des Gehäuses 8 aufsteigend angeordnet. Im Auslaufbereich der Förderschnecke 12 sind Abstreifelemente 23 an der Innenseite der Ummantelung 17 angeordnet. Benachbart zu den Abstreifelementen 23 weist die Ummantelung 17 im Auslaufbereich der Förderschnecke 12 sich in Umfangsrichtung erstreckende Austrittsöffnungen 22 auf.

Im Kopfbereich des Gehäuses 8 ist im Inneren der Ummantelung 17 ein als Sauggebläse 20 ausgeführtes Mittel zur Beaufschlagung der Separier- oder Reinigungseinrichtung mit einem Luftstrom angeordnet. Das Sauggebläse 20 ist hierzu mittels eines Antriebsmotors 21 antreibbar. Das Sauggebläse 20 erzeugt einen in Förderrichtung der Förderschnecke 12 gerichteten Luftstrom, dessen Strömungsrichtung mittels Pfeilen LS veranschaulicht ist. Der Luftstrom tritt im unteren Bereich des Gehäuses 8 ein und tritt im Kopfbereich des Gehäuses 8 aus der nach oben hin offenen Ummantelung 17 aus. Zwischen der Ummantelung 17 und der radial hierzu beabstandeten Innenwand des Gehäuses 8 bildet sich eine zweite Ringkammer 24 aus.

Im Kopfbereich des Gehäuses 8 befindet sich eine Abscheideöffnung 25, durch welche die von dem Korn separierten Erntegutbestandteile ausgeschieden werden. Diese können einem Spreuverteiler oder einer im Heckbereich des Mähdreschers 1 angeordneten Häcksel- und Verteilvorrichtung zugeführt werden.

Im unteren Bereich des Gehäuses 8 befindet sich ein zweites Querförderorgan 26, welches in einem kanalartigen Abschnitt 27 der Ummantelung 17 angeordnet ist. Das zweite Querförderorgan 26 ist ebenfalls als Querförderschnecke ausgeführt. Der kanalartige Abschnitt 27 mündet in eine Gutaustrittsöffnung 28.

Nachfolgend wird die Funktionsweise der in Fig. 2 dargestellten Separier- oder Reinigungseinrichtung 7 exemplarisch erläutert.

Durch die Guteintrittsöffnung 9 gelangt zu separierendes Erntegut von dem Vorbereitungsboden in die Separier- oder Reinigungseinrichtung 7 und wird von dem ersten Querförderorgan 10 der Förderschnecke 12 zugeführt. Mittels der Förderschnecke 12 wird das Erntegut in im Wesentlichen vertikaler Richtung gefördert. Während des Förderns entmischen sich die leichten zu separierenden Bestandteile im Erntegut, Spreu, Kurzstroh sowie Fragmente von Pflanzenblättern, aufgrund von Schwerkraft, so dass vor allem das schwerere Korn in radialer Richtung nach außen gelangt und durch den siebartigen Abschnitt 15a der Mantelhülle 15 abgeschieden wird. Die verbleibenden leichten Bestandteile werden hingegen von der Förderschnecke 12 weitergefördert. Unterstützt wird dieser Separierprozess durch den von dem Sauggebläse 20 erzeugten, in Förderrichtung der Förderschnecke 12 gerichteten Luftstrom LS. Das durch den siebartigen Abschnitt 15a hindurchtretende Erntegut, im Wesentlichen Korn, gelangt in die erste Ringkammer 19 zwischen der Mantelhülle 15 und der diese umgebenden Ummantelung 17. Die erste Ringkammer 19 ist, wie auch das Innere der Mantelhülle 17, durch den Luftstrom LS durchströmt, so dass auch in der ersten Ringkammer 19 die zusammen mit dem Korn durch den siebartigen Abschnitt 15a hindurchgetretenen leichteren Erntegutbestandteile von diesem in vertikaler Richtung abgefördert werden, während das schwerere Korn aufgrund der Schwerkraft nach unten in Richtung des unteren Bereichs des Gehäuses 8 gelangt.

Die Ummantelung 17 weist auf ihrer der Mantelhülle 15 zugewandten Innenseite ein oder mehrere Luftleitelemente 18 auf, denen die Aufgabe zukommt, eine effiziente Durchströmung der ersten Ringkammer 19 zu gewährleisten, so dass der benötigte Luftvolumenstrom, der von dem Sauggebläse 20 bereitgestellt werden muss, möglichst gering ist. Die schrauben- oder spiralförmig ausgebildeten Luftleitelemente 18 sind unter einem Winkel zwischen 35° und 55° besonders bevorzugt zwischen 40° und 50° zur Schneckenwe Ile 13 geneigt angeordnet. Die Luftleitelemente 18 sind dabei wie das zumindest eine Schneckenblech 14 der Förderschnecke 12 aufsteigend angeordnet. Hierdurch lässt sich ein vergleichbarer Effekt der Separierung der schweren Körner von den leichteren, faserartigen Bestandteilen des Erntegutes herbeiführen. Während die schweren Körner entlang der Luftleitelemente 18 in Richtung der Ummantelung 17 abgelenkt werden, werden die leichteren Bestandteile nach innen und oben abgelenkt.

Im Auslaufbereich der Förderschnecke 12 sind Abstreifelemente 23 an der Innenwand der Ummantelung 17 angeordnet. Diesen kommt die Aufgabe zu, restliches Korn, welches zusammen mit den faserartigen Bestandteilen von der Förderschnecke 12 nach oben gefördert wurde, ohne zwischenzeitlich durch den siebartigen Abschnitt 15a der Mantelhülle 15 abgeschieden worden zu sein, durch die Austrittsöffnungen 22 in die zweite Ringkammer 24 abzuführen. Die Körner können hierzu die Abstreifelemente 23 passieren und nach außen in Richtung der Austrittsöffnungen 22 gelangen, während die faserartigen Bestandteile nach innen und oben abgelenkt werden. Auf diese Weise gelangen restliche Körner zurück in den unteren Bereich des Gehäuses 8, wo diese von dem ersten Querförderorgan 10 erneut der Förderschnecke 12 zugeführt werden.

Die faserartigen Bestandteile werden durch den Luftstrom LS in Richtung des Kopfbereiches des Gehäuses 8 gefördert, um durch die Abscheideöffnung 25 ausgeschieden zu werden. Zur Vermeidung von übermäßiger Staubentwicklung kann im Kopfbereich des Gehäuses 8 der Luftstrom im Zentrifugalverfahren von den faserartigen Bestandteilen getrennt und teilweise durch die zweite Ringkammer 24 entgegen der Förderrichtung der Förderschnecke 12 in den unteren Bereich gefördert werden. Auf diese Weise kann der Luftstrom von dem oberhalb der Ummantelung 17 beziehungsweise der Mantelhülle 15 angeordneten Sauggebläse 20 im Umlaufverfahren gefördert werden.

Das unabhängige Antreiben der Förderschnecke 12 und der Mantelhülle 15 gestattet es, in Abhängigkeit von der Erntegutart die Förder- beziehungsweise Rotationsgeschwindigkeit aufeinander abzustimmen, um Erntegutverluste zu reduzieren.

Eine vorteilhafte Weiterbildung zur Reduzierung von Erntegutverlusten sieht vor, dass das wenigstens eine Schneckenblech der Förderschnecke entlang seiner axialen Erstreckung durch Öffnungen unterbrochen ist, deren Größe und Form ein Hindurchtreten der schweren Erntegutbestandteile, wie Korn, ermöglichen. Hierdurch kann die Förderschnecke in ein schrägstehendes kamm- oder propellerartiges Gebilde aufgelöst werden. Dabei können die Abstreifelemente im Bereich der Öffnungen in dem wenigstens einen Schneckenblech oberhalb dieser als rechenartige Gebilde ausgeführt sein, welche die schwereren Erntegutbestandteile hindurchtreten lassen, jedoch die leichteren Erntegutbestandteile weitgehend in Förderrichtung der Förderschnecke abfördern, wobei letzteres durch den Luftstrom unterstützt wird.

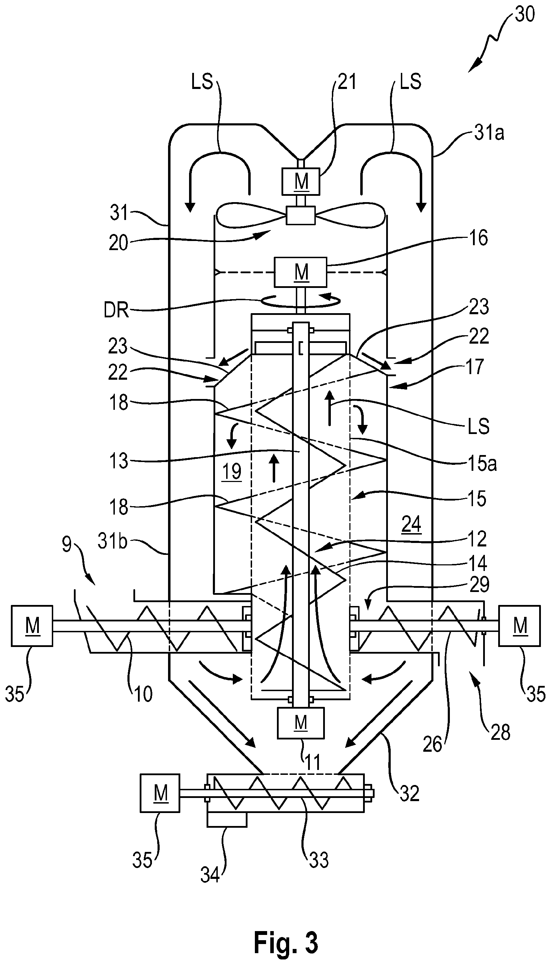

In Fig. 3 ist eine zweite Ausführungsform eine schematische Darstellung einer Separier- oder Reinigungseinrichtung 30 gemäß einer zweiten Ausführungsform dargestellt. Für mit der Ausführungsform gemäß Fig. 2 identische Bauteile der Separier- oder Reinigungseinrichtung 30 wurden die entsprechenden Bezugszeichen beibehalten. Die Funktionsweise der Separier- oder Reinigungseinrichtung 30 unterscheidet sich von der ersten Ausführungsform der Separier- oder Reinigungseinrichtung 7 gemäß Fig. 2 durch die Behandlung von so genannter Überkehr, das heißt eines vor allem aus nicht ausgedroschenen Ährenbestandteilen, Körnern und Spreu bestehenden Gutstromes.

Die Separier- oder Reinigungseinrichtung 30 weist ebenfalls ein im Wesentlichen zylindrisches Gehäuse 31 auf, welches jedoch in seinem Kopfbereich 31a über keine Abscheideöffnung verfügt. Der Kopfbereich 31a ist zur Längsachse des Gehäuses 31 im Wesentlichen symmetrisch ausgeführt. In seiner Draufsicht entspricht der Kopfbereich 31a in etwa einer Ansicht auf einen Torus von oben. So weist der Kopfbereich 31a ausgehend von der Längsachse des Gehäuses 31 einen bogenförmigen Verlauf. Im Kopfbereich 31a wird der von dem Sauggebläse 20 erzeugte Luftstrom LS durch die bogenförmige Ausgestaltung umgelenkt und durch die zweite Ringkammer 24 zum unteren Bereich 31b des Gehäuses 31 zurückgeführt. Die aus den Austrittsöffnungen 22 der Ummantelung 17 austretende Überkehr gelangt in den unteren Bereich 31b des Gehäuses 31. Um zu vermeiden, dass die Überkehr von dem ersten Querförderorgan 10 erneut der Förderschnecke 12 zugeführt wird, ist das erste Querförderorgan 10 zumindest im Bereich der zweiten Ringkammer 24 in Umfangsrichtung eingehaust. Das ebenfalls weitgehend eingehauste zweite Querförderorgan 26 weist an seinem in die Ummantelung 17 hineinragenden Ende eine Guteintrittsöffnung 29 auf, durch welche gereinigtes Erntegut dem Querförderorgan 26 zum Abfördern zugeführt wird. An seinem aus dem Gehäuse 31 herausragenden Ende befindet sich die Gutaustrittsöffnung 28. Durch die Gutaustrittsöffnung 28 gelangt das gereinigte Erntegut zu einem weiteren Förderorgan des Mähdreschers 1, um es einem Korntank zuzuführen.

An den unteren Bereich 31b schließt sich ein im Wesentlichen trichterförmiges Gehäusesegment 32 an. Das Gehäusesegment 32 mündet in ein drittes Querförderorgan 33. Das Querförderorgan 33 wird von einem Aktor 35 angetrieben. An einem Ende weist das Querförderorgan 33 eine Abscheideöffnung 34 auf. Aus dieser tritt die Überkehr aus und wird der Dreschvorrichtung 5 zum erneuten Ausdrusch zugeführt.

**Bezugszeichenliste**

| | | | |
|---|---|---|---|
| 1 | Mähdrescher | 30 | Separiereinrichtung |
| 2 | Erntegut | 31 | Gehäuse |
| 3 | Vorsatzgerät | 31a | Kopfbereich |
| 4 | Schrägförderer | 31b | unterer Bereich von 31 |
| 5 | Dreschvorrichtung | 32 | Gehäusesegment |
| 6 | Dreschkorb | 33 | Drittes Querförderorgan |
| 7 | Separiereinrichtung | 34 | Abscheideöffnung |
| 8 | Gehäuse | 35 | Aktor |
| 9 | Guteintrittsöffnung | | |
| 10 | Erstes Querförderorgan | LS | Luftstrom |
| 11 | Antrieb | DR | Drehrichtung |
| 12 | Förderschnecke | | |
| 13 | Schneckenwelle | | |
| 14 | Schneckenblech | | |
| 15 | Mantelhülle | | |
| 15a | Siebartiger Abschnitt von Mantelhülle 15 | | |
| 16 | Antrieb | | |
| 17 | Ummantelung | | |
| 18 | Luftleitelement | | |
| 19 | Erste Ringkammer | | |
| 20 | Sauggebläse | | |
| 21 | Antriebsmotor | | |
| 22 | Austrittsöffnung | | |
| 23 | Abstreifelement | | |
| 24 | Zweite Ringkammer | | |
| 25 | Abscheideöffnung | | |
| 26 | Zweites Querförderorgan | | |
| 27 | Kanalartiger Abschnitt | | |
| 28 | Gutaustrittsöffnung | | |
| 29 | Guteintrittsöffnung | | |

## Patentansprüche

1. Landwirtschaftliche Erntemaschine (1), insbesondere Mähdrescher, mit einer Einrichtung (7, 30) zum Separieren von Erntegut, umfassend:
- ein zylindrisches Gehäuse (8, 31);
- eine im Inneren des Gehäuses (8, 31) angeordnete, zylindrische Mantelhülle (15);
- eine von der Mantelhülle (15) umschlossene Förderschnecke (12); sowie
- Mittel (20) zur Beaufschlagung der Separiereinrichtung (7, 30) mit einem Luftstrom (LS); und wobei
- die Mantelhülle (15) von einer zylindrischen Ummantelung (17) umgeben ist, welche in Längsrichtung von dem Luftstrom (LS) durchströmt ist,
**dadurch gekennzeichnet,**
**dass** die Mantelhülle (15) zumindest abschnittsweise siebartig ausgebildet ist.

2. Landwirtschaftliche Erntemaschine (1) nach Anspruch 1, **dadurch gekennzeichnet, dass** die Ummantelung (17) auf ihrer Innenseite mit zumindest einem, unter einem Winkel zur Längsachse der Förderschnecke (12) geneigt angeordneten Luftleitelement (18) ausgeführt ist.

3. Landwirtschaftliche Erntemaschine (1) nach Anspruch 2, **dadurch gekennzeichnet, dass** das zumindest eine Luftleitelement (18) schrauben- oder spiralförmig ausgebildet ist.

4. Landwirtschaftliche Erntemaschine (1) nach einem der Ansprüche 1 bis 3, **dadurch gekennzeichnet, dass** der Luftstrom (LS) in Förderrichtung der Förderschnecke (12) gerichtet ist.

5. Landwirtschaftliche Erntemaschine (1) nach einem der Ansprüche 1 bis 4, **dadurch gekennzeichnet, dass** die Förderschnecke (12) ein oder mehrere Schneckenbleche (14) aufweist, die zumindest im oberen Abschnitt der Förderschnecke (12) mit Öffnungen versehen sind.

6. Landwirtschaftliche Erntemaschine (1) nach einem der Ansprüche 1 bis 5, **dadurch gekennzeichnet, dass** im Auslaufbereich der Förderschnecke (12) Abstreifelemente (23) an der Innenseite der Ummantelung (17) angeordnet sind.

7. Landwirtschaftliche Erntemaschine (1) nach einem der Ansprüche 1 bis 6, **dadurch gekennzeichnet, dass** die Ummantelung (17) im Auslaufbereich der Förderschnecke (12) sich in Umfangsrichtung erstreckende Austrittsöffnungen (22) aufweist.

8. Landwirtschaftliche Erntemaschine (1) nach einem der Ansprüche 1 bis 7, **dadurch gekennzeichnet, dass** der aus der obenseitig offenen Ummantelung (17) austretende Luftstrom (LS) durch das die Ummantelung (17) umhüllende Gehäuse (8) nach unten führbar ist.

9. Landwirtschaftliche Erntemaschine (1) nach einem der Ansprüche 1 bis 8, **dadurch gekennzeichnet, dass** die Förderschnecke (12) und die Mantelhülle (15) unabhängig voneinander antreibbar sind.

10. Landwirtschaftliche Erntemaschine (1) nach einem der Ansprüche 1 bis 9, **dadurch gekennzeichnet, dass** die Separiereinrichtung (7, 30) um einen Winkel zur Vertikalen neigbar ist.

11. Landwirtschaftliche Erntemaschine (1) nach einem der Ansprüche 1 bis 10, **dadurch gekennzeichnet, dass** das Mittel (20) zur Beaufschlagung der Separiereinrichtung (7, 30) mit einem Luftstrom (LS) als ein Sauggebläse ausgebildet ist, welches den in Förderrichtung der Förderschnecke (12) gerichteten Luftstrom (LS) erzeugt, welcher die Förderschnecke (12) und das Innere der Ummantelung (17) durchströmt, und bei dessen Austritt aus der Förderschnecke (12) und der Ummantelung (17) durch das Gehäuse (8, 31) in einem zumindest abschnittsweise ringförmigen Raum zwischen dem Gehäuse (8, 31) und der Ummantelung (17) entgegen der Förderrichtung der Förderschnecke (12) umlenkbar ist.

12. Landwirtschaftliche Erntemaschine (1) nach einem der Ansprüche 1 bis 11, **dadurch gekennzeichnet, dass** die Förderschnecke (12) im Einlaufbereich angenommenes zu separierendes Erntegut in vertikaler Richtung fördert, wobei schwerere Erntegutbestandteile durch die zumindest abschnittsweise siebartig ausgebildete Mantelhülle (15) separierbar sind, während die leichteren Erntegutbestandteile mittels der Luftströmung (LS) im Auslaufbereich der Förderschnecke (12) aus dieser austragbar und durch einen nachgeordneten Zentrifugalabscheider aus dem Luftstrom (LS) abscheidbar sind.

13. Landwirtschaftliche Erntemaschine (1) nach einem der Ansprüche 1 bis 12, **dadurch gekennzeichnet, dass** die Separiereinrichtung (7, 30) ein erstes Querförderorgan (10) und ein zweites Querförderorgan (26) aufweist, die im Wesentlichen senkrecht zur Förderschnecke (12) angeordnet sind.

14. Landwirtschaftliche Erntemaschine (1) nach einem der Ansprüche 1 bis 13, **dadurch gekennzeichnet, dass** die Separiereinrichtung (30) ein sich im unteren Bereich (31b) des Gehäuses (31) an dieses anschließendes Gehäusesegment (32) aufweist, welches im Wesentlichen trichterförmig ausgebildet ist.

15. Landwirtschaftliche Erntemaschine (1) nach 14, **dadurch gekennzeichnet, dass** das Gehäusesegment (31) in ein drittes Querförderorgan (33) mündet.

## Claims

1. An agricultural harvesting machine (1), in particular a combine harvester, having a device (7, 30) for separating harvested crop, comprising:
- a cylindrical housing (8, 31);
- a cylindrical covering shell (15) disposed in the interior of the housing (8, 31);
- a feeder auger (12) enclosed by the covering shell (15); as well as
- means (20) for applying a stream of air (LS) to the separating device (7, 30);
and wherein
- the covering shell (15) is surrounded by a cylindrical sheath (17) through which the stream of air (LS) flows in the longitudinal direction,
**characterized in that**
the covering shell (15) is in the form of a sieve, at least in sections.

2. The agricultural harvesting machine (1) according to claim 1, **characterized in that** the inside of the sheath (17) is provided with at least one air control element (18) which is inclined at an angle to the longitudinal axis of the feeder auger (12).

3. The agricultural harvesting machine (1) according to claim 2, **characterized in that** the at least one air control element (18) is helical or spiral in configuration.

4. The agricultural harvesting machine (1) according to one of claims 1 to 3, **characterized in that** the stream of air (LS) is directed in the feeding direction of the feeder auger (12).

5. The agricultural harvesting machine (1) according to one of claims 1 to 4, **characterized in that** the feeder auger (12) has one or more auger blades (14) provided with openings in at least the upper section of the feeder auger (12).

6. The agricultural harvesting machine (1) according to one of claims 1 to 5, **characterized in that** in the discharge region of the feeder auger (12), stripper elements (23) are provided on the inside of the sheath (17).

7. The agricultural harvesting machine (1) according to one of claims 1 to 6, **characterized in that** in the discharge region of the feeder auger (12), the sheath (17) has discharge openings (22) which extend in the circumferential direction.

8. The agricultural harvesting machine (1) according to one of claims 1 to 7, **characterized in that** the stream of air (LS) exiting the sheath (17) which is open at the top can be directed downwardly through the housing (8) which surrounds the sheath (17).

9. The agricultural harvesting machine (1) according to one of claims 1 to 8, **characterized in that** the feeder auger (12) and the covering shell (15) can be driven independently of each other.

10. The agricultural harvesting machine (1) according to one of claims 1 to 9, **characterized in that** the separating device (7, 30) can be inclined at an angle to the vertical.

11. The agricultural harvesting machine (1) according to one of claims 1 to 10, **characterized in that** the means (20) for applying a stream of air (LS) to the separating device (7, 30) is configured as a suction fan which produces the stream of air (LS) which is directed in the feeding direction of the feeder auger (12) and which flows through the feeder auger (12) and the interior of the sheath (17), and which upon exiting the feeder auger (12) and the sheath (17) can be diverted against the feeding direction of the feeder auger (12) through the housing (8, 31) in a space between the housing (8, 31) and the sheath (17) which is annular in at least sections.

12. The agricultural harvesting machine (1) according to one of claims 1 to 11, **characterized in that** the feeder auger (12) feeds harvested crop to be separated which has been picked up in the intake region in a vertical direction, whereupon heavier components of the harvested crop can be separated by means of the covering shell (15) which is in the form of a sieve in at least sections, while the lighter components of the harvested crop can be discharged therefrom in the discharge region of the feeder auger (12) by means of the stream of air (LS) and can be separated out of the stream of air (LS) by means of a downstream centrifugal stripper.

13. The agricultural harvesting machine (1) according to one of claims 1 to 12, **characterized in that** the separating device (7, 30) has a first transverse conveying unit (10) and a second transverse conveying unit (26) which are disposed substantially perpendicular to the feeder auger (12).

14. The agricultural harvesting machine (1) according to one of claims 1 to 13, **characterized in that** the separating device (30) has a housing segment (32) which is attached to the former in the lower region (31b) of the housing (31) and which is configured substantially in the form of a hopper.

15. The agricultural harvesting machine (1) according to claim 14, **characterized in that** the housing segment (31) leads into a third transverse conveying unit (33).

## Revendications

1. Machine agricole de récolte (1), en particulier, moissonneuse-batteuse, comprenant un équipement (7, 30) pour séparer du produit récolté, incluant :
- un carter cylindrique (8, 31) ;
- une gaine enveloppante cylindrique (15) disposée à l'intérieur du carter (8, 31) ;
- une vis de convoyage (12) entourée par la gaine enveloppante (15) ; ainsi que
- un moyen (20) pour soumettre l'équipement de séparation (7, 30) à un courant d'air (LS) ;
et
- la gaine enveloppante (15) étant entourée par une enveloppe cylindrique (17) qui est parcourue par le courant d'air (LS) dans la direction longitudinale,
**caractérisée en ce que**
la gaine enveloppante (15) est conformée au moins par endroits à la manière d'un tamis.

2. Machine agricole de récolte (1) selon la revendication 1, **caractérisée en ce que** l'enveloppe (17) est conçue sur son côté intérieur avec au moins un élément de guidage d'air (18) disposé de manière inclinée selon un angle par rapport à l'axe longitudinal de la vis de convoyage (12).

3. Machine agricole de récolte (1) selon la revendication 2, **caractérisée en ce que** le au moins un élément de guidage d'air (18) est conformé en forme de vis ou de spirale.

4. Machine de travail agricole (1) selon une des revendications 1 à 3, **caractérisée en ce que** le courant d'air (LS) est orienté dans la direction de convoyage de la vis de convoyage (12).

5. Machine agricole de récolte (1) selon une des revendications 1 à 4, **caractérisée en ce que** la vis de convoyage (12) comporte une ou plusieurs tôles de vis (14) qui, au moins dans la portion supérieure de la vis de convoyage (12), sont pourvues d'ouvertures.

6. Machine agricole de récolte (1) selon une des revendications 1 à 5, **caractérisée en ce que**, dans la zone de sortie de la vis de convoyage (12), des éléments de raclage (23) sont disposés sur le côté intérieur de l'enveloppe (17).

7. Machine agricole de récolte (1) selon une des revendications 1 à 6, **caractérisée en ce que** l'enveloppe (17) comporte, dans la zone de sortie de la vis de convoyage (12), des ouvertures de sortie (22) s'étendant dans la direction circonférentielle.

8. Machine agricole de récolte (1) selon une des revendications 1 à 7, **caractérisée en ce que** le courant d'air (LS) sortant de l'enveloppe (17) ouverte en partie haute peut être guidé vers le bas à travers le carter (8) enveloppant l'enveloppe (17).

9. Machine agricole de récolte (1) selon une des revendications 1 à 8, **caractérisée en ce que** la vis de convoyage (12) et la gaine enveloppante (15) peuvent être entraînées indépendamment l'une de l'autre.

10. Machine agricole de récolte (1) selon une des revendications 1 à 9, **caractérisée en ce que** l'équipement de séparation (7, 30) est inclinable selon un angle par rapport à la verticale.

11. Machine agricole de récolte (1) selon une des revendications 1 à 10, **caractérisée en ce que** le moyen (20) pour soumettre l'équipement de séparation (7, 30) à un courant d'air (LS) est conformé en ventilateur aspirant, lequel génère le courant d'air (LS) qui est orienté dans la direction de convoyage de la vis de convoyage (12), qui parcourt la vis de convoyage (12) et l'intérieur de l'enveloppe (17) et qui, en sortant de la vis de convoyage (12) et de l'enveloppe (17), peut être dévié par l'intermédiaire du carter (8, 31) dans un espace au moins par endroits annulaire entre le carter (8, 31) et l'enveloppe (17) à l'opposé de la direction de convoyage de la vis de convoyage (12).

12. Machine agricole de récolte (1) selon une des revendications 1 à 11, **caractérisée en ce que**, dans la zone d'entrée, la vis de convoyage (12) convoie du produit récolté reçu à séparer dans la direction verticale, des composants de produit récolté lourds étant séparables par l'intermédiaire de la gaine enveloppante (15) conformée au moins par endroits à la manière d'un tamis, tandis que, au moyen du courant d'air (LS) dans la zone de sortie de la vis de convoyage (12), les composants de produit récolté plus légers peuvent être éjectés hors de celle-ci et séparés du courant d'air (LS) par l'intermédiaire d'un séparateur centrifuge disposé en aval.

13. Machine agricole de récolte (1) selon une des revendications 1 à 12, **caractérisée en ce que** l'équipement de séparation (7, 30) comporte un premier organe de convoyage transversal (10) et un deuxième organe de convoyage transversal (26) qui sont disposés sensiblement perpendiculairement à la vis de convoyage (12) .

14. Machine agricole de récolte (1) selon une des revendications 1 à 13, **caractérisée en ce que** l'équipement de séparation (30) comporte un segment de carter (32) qui se raccorde au carter (31) dans la zone inférieure (31b) de celui-ci et qui est conformé sensiblement en forme d'entonnoir.

15. Machine agricole de récolte (1) selon la revendication 14, **caractérisée en ce que** le segment de carter (31) débouche dans un troisième organe de convoyage transversal (33).
